(19) Europäisches Patentamt / European Patent Office / Office européen des brevets

(11) **EP 4 254 008 A1**

(12) **DEMANDE DE BREVET EUROPEEN**

(43) Date de publication:
04.10.2023 Bulletin 2023/40

(21) Numéro de dépôt: 23163684.6

(22) Date de dépôt: 23.03.2023

(51) Classification Internationale des Brevets (IPC):
**G01S 13/88** (2006.01)     **G01S 13/89** (2006.01)
**G06F 18/23** (2023.01)

(52) Classification Coopérative des Brevets (CPC):
**G01S 13/885; G01S 13/89; G06F 18/23;
G06V 10/762; G06V 20/64**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **29.03.2022 FR 2202804**

(71) Demandeur: **Commissariat à l'énergie atomique
et aux énergies alternatives
75015 Paris (FR)**

(72) Inventeurs:
• **PEREIRA DA SILVA, Alex**
  **38054 GRENOBLE Cedex 09 (FR)**
• **MARET, Luc**
  **38054 GRENOBLE Cedex 09 (FR)**
• **DORE, Jean-Baptiste**
  **38054 GRENOBLE Cedex 09 (FR)**
• **D'ERRICO, Raffaele**
  **38054 GRENOBLE Cedex 09 (FR)**

(74) Mandataire: **Atout PI Laplace
Immeuble "Visium"
22, avenue Aristide Briand
94117 Arcueil Cedex (FR)**

(54) **PROCEDE DE DETECTION DE STRUCTURES LONGITUDINALES ENTERREES AU MOYEN D'UN RADAR A PENETRATION DE SOL**

(57)     Procédé de détection de structures longitudinales enterrées à l'aide d'un radar à pénétration de sol, le procédé comprenant les étapes de :
- Réaliser (301) plusieurs acquisitions de signaux radar pour une zone du sol,
- Déterminer (302), à partir desdits signaux radars, un nuage de points 3D, chaque point correspondant à une détection radar et étant géolocalisé dans l'espace,
- Sélectionner (303) au moins un ensemble de points du nuage de points 3D comprenant un nombre de points supérieur ou égal à un seuil minimum de détection permettant de caractériser une structure longitudinale, les points dudit ensemble étant sensiblement alignés entre eux.

FIG.3

**Description**

L'invention concerne le domaine des radars à pénétration de sol ou géoradars qui couvrent l'ensemble des techniques permettant de détecter, localiser ou identifier des cibles souterraines au moyen d'un système radiofréquence.

Les cibles souterraines sont, par exemple, des canalisations de diamètre et nature différentes (acier, PVC, ciment, béton...) qui peuvent être enterrées à différentes profondeurs.

Un objectif des radars à pénétration de sol est de localiser de tels objets avec précision afin de pouvoir cartographier correctement un sous-sol, par exemple pour des besoins de sécurité lors de travaux.

Les images fournies par un radar à pénétration de sol sont affectées par des éléments perturbateurs qui peuvent être de plusieurs natures (effet du couplage d'antennes, bruit thermique, interférents radio....). Quand un objet est éclairé par le radar, celui-ci renvoi de l'énergie qui peut être mesurée. Le sol n'étant pas un milieu homogène, les algorithmes d'imagerie font en général apparaitre un fouillis de points d'intérêt. Ce fouillis est constitué de réflexions du signal radar sur une interface entre deux portions du sol de natures différentes ou sur un objet réfléchissant présent dans le sol (type cailloux, enrochements).

Un problème que vise à résoudre la présente invention consiste à détecter et cartographier la présence de canalisations ou plus généralement de structures longitudinales dans le sol en réduisant le fouillis de points d'intérêts présent dans l'image 3D reconstruite à partir des acquisitions de signaux radar.

Les techniques des réductions de fouillis sont largement abordées dans la littérature. La plupart des méthodes existantes peuvent être classées en deux catégories principales : les méthodes basées sur une modélisation du fouillis, et les méthodes visant à réduire le fouillis par filtrage.

Les principaux désavantages des méthodes de modélisation du fouillis reposent sur le fait que la performance des techniques est dépendante du modèle de fouillis adopté, sur la difficulté d'estimer précisément les paramètres du modèle, et/ou sur la connaissance préalable de la réponse du terrain sans cibles. Des techniques basées sur la modélisation des signaux (fouillis et cibles) sont notamment décrites dans les références [1], [2], [3], [4], et [5].

Pour les techniques basées sur le filtrage du fouillis, un inconvénient est que certaines méthodes de ce type filtrent le fouillis avec dégradation du signal correspondant aux cibles, tandis que d'autres doivent assumer l'hypothèse que le signal du fouillis est plus fort que celui des cibles ou que le spectre de fréquence du signal de fouillis est concentré dans une région différente de celle du signal des cibles. Des exemples de telles méthodes sont donnés dans les références [6], [7] et [8].

Par ailleurs, des techniques basées sur de la détection de formes par la transformée de Hough sont décrites dans les articles [9] et [10]. Ces méthodes sont dédiées exclusivement à la détection 2D du radargramme d'un radar à pénétration de sol sur une grille uniforme. Ces méthodes sont basées sur la reconnaissance d'une parabole dans un radargramme pour un radar à une seule antenne d'émission et de réception (dispositif SISO).

L'invention propose un procédé de détection de structures longitudinales dans un nuage de points d'intérêts 3D déterminé à partir de plusieurs acquisitions radars d'une zone du sol. La méthode proposée est basée sur la recherche de vecteurs unitaires similaires ou sensiblement colinéaires correspondant à des lignes ou plus généralement des formes longitudinales ayant une cohérence dans différents plans. Les points ne correspondant pas à ces détections sont considérés comme appartenant au fouillis et sont filtrés.

Contrairement aux méthodes de modélisation du fouillis, l'invention ne nécessite aucune hypothèse sur une modélisation statistique du fouillis.

Contrairement aux solutions existantes basées sur la transformée de Hough, la solution proposée repose sur un traitement d'un nuage de points 3D ayant un échantillonnage non uniforme, chaque point correspondant à la détection potentielle d'une zone d'intérêt.

L'invention a pour objet un procédé de détection de structures longitudinales enterrées à l'aide d'un radar à pénétration de sol, le procédé comprenant les étapes de :

- Réaliser plusieurs acquisitions de signaux radar pour une zone du sol,

- Déterminer, à partir desdits signaux radars, un nuage de points 3D, chaque point correspondant à une détection radar et étant géolocalisé dans l'espace,

- Sélectionner au moins un ensemble de points du nuage de points 3D comprenant un nombre de points supérieur ou égal à un seuil minimum de détection permettant de caractériser une structure longitudinale, les points dudit ensemble étant sensiblement alignés entre eux.

Selon un aspect particulier de l'invention, l'étape de sélection d'au moins un ensemble de points comprend les sous-étapes itératives de :

- Ordonner les points du nuage de points 3D dans une liste à traiter et sélectionner le point de la liste de plus forte intensité,

- Déterminer les vecteurs unitaires dont l'origine est ledit point sélectionné et la direction est donnée par chacun des autres points du nuage de points 3D,

- Déterminer l'ensemble de points ayant des vecteurs unitaires sensiblement colinéaires,

- Si le nombre de points dudit ensemble est supérieur ou égal audit seuil minimum de détection, identifier ledit ensemble de points comme correspondant à une structure longitudinale et supprimer les points dudit ensemble de la liste à traiter sinon, supprimer du nuage de points 3D et de la liste à traiter ledit point sélectionné de plus forte intensité,

- Itérer les sous-étapes jusqu'à ce que la liste à traiter soit vide.

Selon un aspect particulier de l'invention, l'étape de déterminer l'ensemble des points ayant des vecteurs unitaires sensiblement colinéaires comprend les sous-étapes de :

- Approximer les valeurs numériques des composantes des vecteurs unitaires dans un repère 3D à un nombre de chiffres significatifs prédéterminé,

- Former l'ensemble de points ayant des vecteurs unitaires sensiblement colinéaires en sélectionnant les points dont les composantes approximées sont identiques et les plus récurrentes.

Dans une variante de réalisation, le procédé comprend en outre les sous-étapes de :

- Déterminer la valeur dominante de chaque valeur numérique de composante approximée sur l'ensemble des vecteurs unitaires,

- Combiner les points ayant la même valeur dominante pour les trois composantes du repère 3D.

Selon un aspect particulier de l'invention, l'étape de combiner les points de même valeur dominante est réalisée en sélectionnant les points ayant les mêmes valeurs dominantes sur au moins deux composantes.

Selon un aspect particulier de l'invention, l'étape de déterminer l'ensemble des points ayant des vecteurs unitaires sensiblement colinéaires comprend les sous-étapes de :

- Calculer l'angle entre chaque couple de vecteurs unitaires,

- Conserver les points pour lesquels ledit angle est inférieur à un seuil prédéterminé en valeur absolue.

Selon un aspect particulier de l'invention, l'étape de déterminer l'ensemble des points ayant des vecteurs unitaires sensiblement colinéaires comprend les sous-étapes de :

- Convertir les vecteurs unitaires en coordonnées polaires,

- Déterminer un histogramme des valeurs absolues des composantes angulaires desdits vecteurs unitaires pour chaque composante angulaire, chaque histogramme ayant un pas d'échantillonnage prédéterminé,

- Déterminer les valeurs angulaires les plus récurrentes pour chacune des composantes,

- Conserver les points ayant les valeurs angulaires les plus récurrentes sur chaque composante.

Selon un aspect particulier de l'invention, les points du nuage de points 3D sont géolocalisés à l'aide d'un dispositif de géolocalisation du radar à pénétration de sol.

Selon un aspect particulier de l'invention, les acquisitions de signaux radar sont réalisées pour plusieurs plans de la zone du sol.

L'invention a aussi pour objet un radar à pénétration de sol comprenant au moins une antenne d'émission et au moins une antenne de réception et un dispositif de détection de structures longitudinales enterrées dans une zone du sol configuré pour exécuter les étapes du procédé de détection selon l'invention.

L'invention a aussi pour objet un programme d'ordinateur comportant des instructions pour l'exécution du procédé selon l'invention, lorsque le programme est exécuté par un processeur.

L'invention a aussi pour objet un support d'enregistrement lisible par un processeur sur lequel est enregistré un programme comportant des instructions pour l'exécution du procédé selon l'invention, lorsque le programme est exécuté par un processeur.

D'autres caractéristiques et avantages de la présente invention apparaîtront mieux à la lecture de la description qui suit en relation aux dessins annexés suivants.

[Fig. 1] représente une reconstruction 3D d'une scène comprenant un tuyau et du fouillis avec une méthode d'acquisition radar selon l'art antérieur,

[Fig. 2] représente plusieurs images radars successives de la scène de la figure 1, obtenues avec une méthode d'acquisition selon l'art antérieur,

[Fig. 3] représente un organigramme d'un procédé de détection de structures longitudinales selon un mode de réalisation de l'invention,

[Fig. 4] représente un schéma illustrant la construction d'un nuage de points à partir de plusieurs images radar successives,

[Fig. 5] représente un organigramme d'un mode de réalisation particulier du procédé décrit à la figure 3,

[Fig. 6a] représente une illustration d'une étape du procédé de la figure 5,

[Fig. 6b] représente une illustration d'une étape du procédé de la figure 5,

[Fig. 6c] représente une illustration d'une étape du procédé de la figure 5,

[Fig. 6d] représente une illustration d'une étape du procédé de la figure 5,

[Fig. 6e] représente une illustration d'une étape du procédé de la figure 5,

[Fig. 6f] représente une illustration d'une étape du procédé de la figure 5,

[Fig. 6g] représente une illustration d'une étape du procédé de la figure 5,

[Fig. 6h] représente une illustration d'une étape du procédé de la figure 5,

[Fig. 6i] représente une illustration d'une étape du procédé de la figure 5,

[Fig. 6j] représente une illustration d'une étape du procédé de la figure 5,

[Fig.7] schématise l'application du procédé de la figure 5 au nuage de points de la figure 4,

[Fig.8] schématise le résultat du filtrage du fouillis appliqué au nuage de points de la figure 4,

[Fig. 9] représente un schéma d'un système de détection radar selon un mode de réalisation de l'invention.

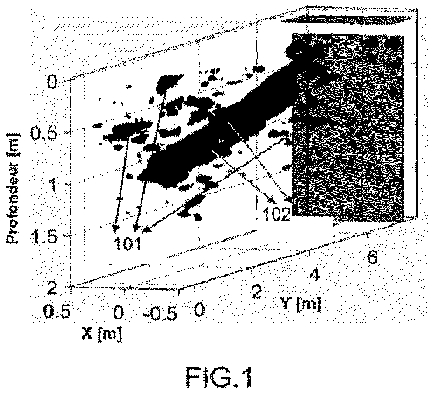

La figure 1 représente une reconstruction 3D d'une scène obtenue au moyen d'acquisitions de mesures réalisées par un radar à pénétration de sol. La scène est caractérisée par la présence d'un tuyau. Comme expliqué en préambule, les images issues d'acquisitions obtenues par un radar à pénétration de sol sont affectées d'éléments perturbateurs appelés fouillis. Sur l'exemple de la figure 1, la reconstruction 3D de points d'intérêts comporte des points appartenant au tuyau 102 que l'on souhaite détecter mais aussi des points 101 appartenant au fouillis.

La scène de la figure 1 est construite à partir de plusieurs images radars obtenues pour plusieurs plans ou coupes successifs de la scène 3D.

Un objectif de l'invention est de réduire les points 101 appartenant au fouillis de sorte à mieux détecter la présence d'une structure longitudinale telle qu'un tuyau ou une canalisation.

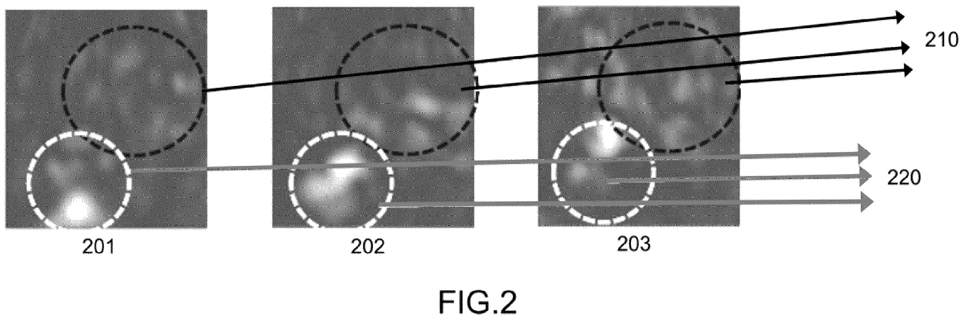

La figure 2 représente trois images radar 201 ,202,203 obtenues successivement pour trois plans de coupes différents de la scène de la figure 1.

On remarque en analysant ces trois plans de coupes que le fouillis 210 correspond à un bruit qui est cohérent avec la cible à détecter, c'est-à-dire qu'il peut présenter des amplitudes équivalentes à une cible sur une image radar. Cependant le fouillis 210 n'est pas cohérent spatialement lorsque le radar se déplace le long de la scène. Cela est dû notamment au fait que le fouillis est issu de réflexions des signaux radar sur des objets de très petite taille ou sur des interfaces entre deux natures de sol qui peuvent varier spatialement.

A l'inverse, on remarque qu'un objet tel qu'un tuyau présente une cohérence spatiale c'est-à-dire qu'on retrouve les mêmes amplitudes sur différentes images correspondants à différents plans de coupes. Autrement dit, les échos radars d'une telle cible sont spatialement corrélés dans différentes images correspondants à différents plans de coupes.

Cette propriété est exploitée par l'invention pour rechercher, dans un nuage de points du type décrit à la figure 1, des formes rectilignes ou longitudinales, qui correspondent au type de cible à détecter, à savoir des tuyaux ou canalisations.

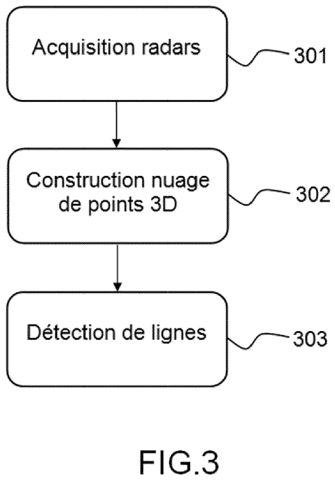

La figure 3 schématise les étapes de mise en oeuvre d'un procédé de détection de structures longitudinales selon un mode de réalisation de l'invention.

La première étape 301 consiste à réaliser une acquisition d'images radars selon plusieurs plans de coupes d'une zone du sol, afin d'obtenir des images radars du type décrit à la figure 2.

L'acquisition d'images radars est réalisée au moyen d'un radar à pénétration de sol comprenant au moins une antenne d'émission et une antenne de réception.

Le radar se déplace sur la zone à imager afin de réaliser plusieurs acquisitions successives. Les signaux bruts mesurés sont traités afin de générer une image radar dont chaque point présente une intensité caractéristique de la réflexion des signaux sur une cible enterrée.

L'étape 301 du procédé peut être réalisée par exemple au moyen de la méthode d'acquisition décrite dans la demande de brevet FR 3111994 du Demandeur. Cette demande décrit l'utilisation d'un radar dit MIMO (Multiple Input Multiple Output) ayant plusieurs antennes d'émission et de réception couplé à un algorithme de démodulation pour produire l'image radar. Toute autre méthode d'acquisition radar permettant de générer des images radar de plusieurs plans de coupe d'une zone 3D peut être utilisée.

A l'étape 302, on construit ensuite un nuage de points 3D à partir des différentes images radars des plans de coupe de la scène. Cette étape nécessite une géolocalisation des prises de vues de chaque image afin d'en déduire une position des plans de coupe et donc des points. La géolocalisation peut être réalisée au moyen d'un dispositif de réception de signaux de radionavigation par satellites, type GPS, ou odomètre ou plus généralement tout type de dispositif de localisation.

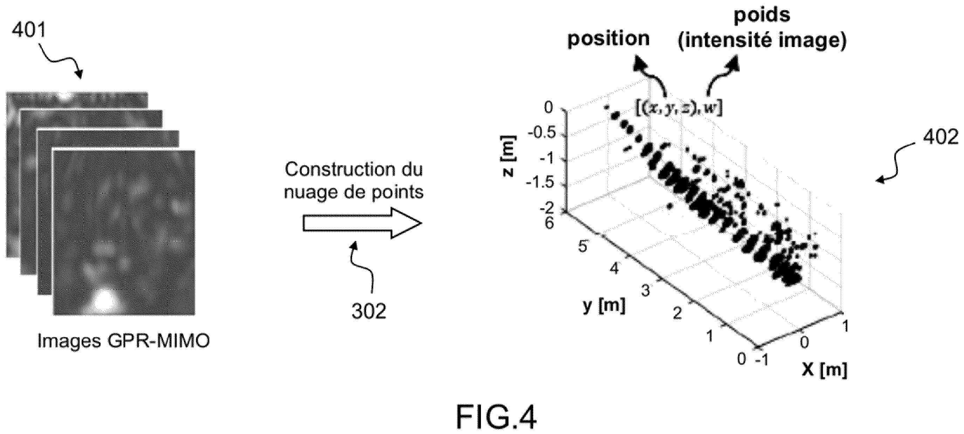

La figure 4 illustre l'étape 302 sur un exemple. Les images radars 401 sont transformées en un nuage de points 402 en trois dimensions dans lequel chaque point représente une intensité mesurée sur les images radars et localisée dans l'espace 3D par ses coordonnées spatiales.

A l'étape 303 on applique ensuite une méthode de détection de points alignés au nuage de points 3D 402 afin de détecter des lignes, correspondants à des cibles à détecter et d'éliminer les points qui appartiennent au fouillis.

L'étape 303 consiste en une étape de recherche de vecteurs unitaires similaires, autrement dit des vecteurs unitaires sensiblement colinéaires entre couples de points formant ainsi une ligne.

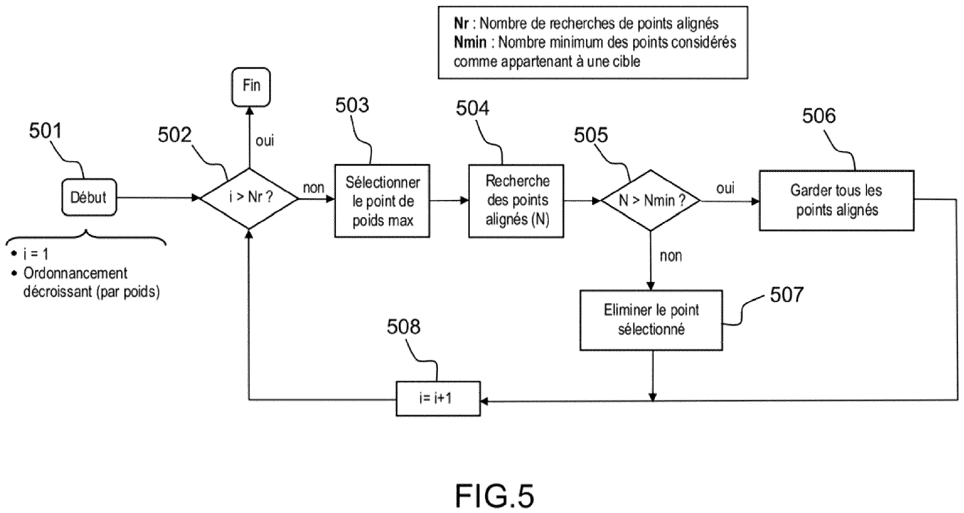

La figure 5 décrit en détail un exemple de mise en oeuvre de l'étape 303.

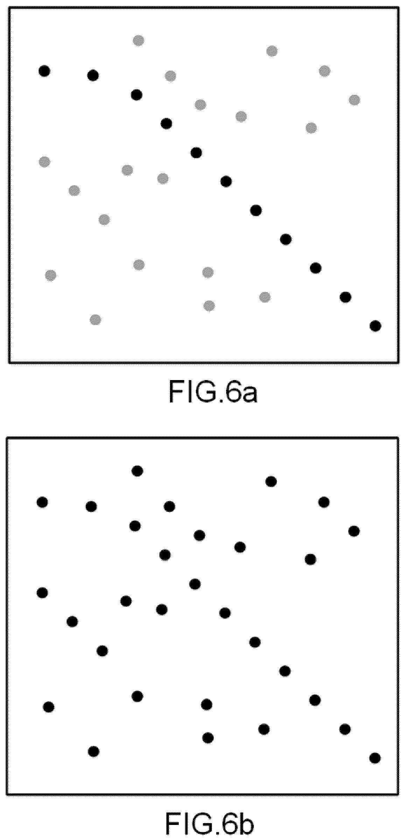

L'algorithme de la figure 5 est illustré sur un exemple donné aux figures 6a à 6j.

La figure 6b représente, schématiquement, un ensemble de points d'un nuage de points 3D reçu en entrée de l'étape 303. Pour simplifier, le nuage de points de la figure 6b est représenté en deux dimensions mais le principe décrit s'applique à l'identique pour un nuage en trois dimensions.

Sur la figure 6a, on a représenté le même nuage de points en identifiant avec des points plus foncés ceux qui correspondent à une canalisation décrivant sensiblement une ligne.

L'algorithme de la figure 5 débute à l'étape 501 où les points du nuage de points 3D sont ordonnancés dans une liste à traiter selon un ordre décroissant de leurs amplitudes.

Un indice i est initialisé à 1 correspondant au nombre de lignes à détecter dans le nuage de points. A l'étape 502, le procédé est poursuivi si i est inférieur ou égal à Nr le nombre maximum de lignes que l'on souhaite détecter.

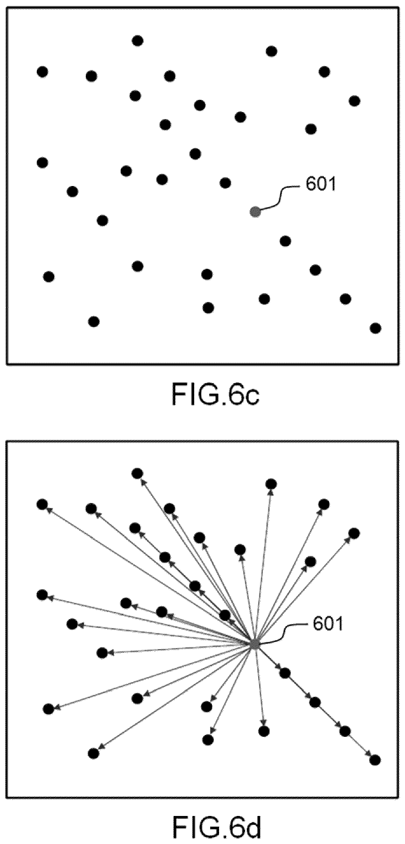

A l'étape 503, on sélectionne le premier point de la liste (celui d'amplitude la plus élevée). Cette étape est illustrée à la figure 6c par le point 601.

A l'étape 504, on recherche l'ensemble des points qui sont alignés ou sensiblement alignés avec le point sélectionné 601.

Pour cela, on détermine tout d'abord tous les vecteurs unitaires ayant comme point de départ le point sélectionné 601 et dont la direction est donnée par l'un des autres points du nuage de points. Cette étape est illustrée à la figure 6d.

Les vecteurs unitaires sont donnés par la formule :

$$u_{jk} = \frac{p_j - p_k}{\|p_j - p_k\|}$$

, où $p_k$ est le point d'origine 601 et $p_j$ est le point d'arrivée.

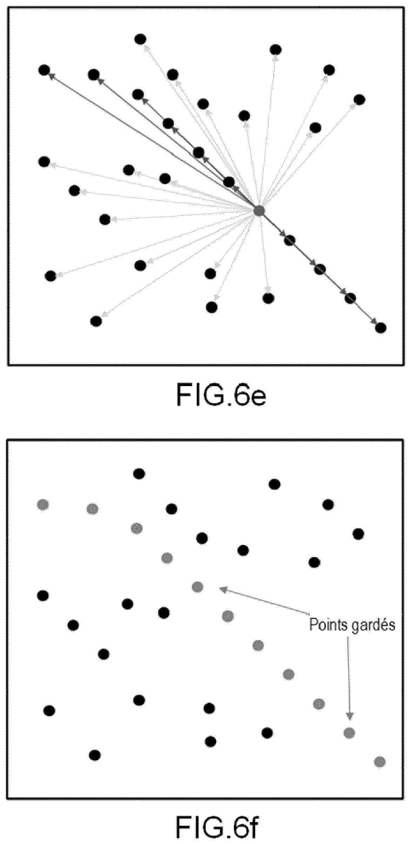

Parmi tous les vecteurs unitaires calculés, on retient ceux qui sont sensiblement colinéaires avec une marge de tolérance prédéterminée. Cette étape est représentée à la figure 6e.

Plusieurs solutions sont possibles pour déterminer l'ensemble des vecteurs sensiblement colinéaires.

Une première solution consiste à exécuter les étapes suivantes.

En premier lieu, on applique une rotation de 180° sur les vecteurs unitaires dont une coordonnée (par exemple la coordonnée en x) est négative :

si $u_{jkx} < 0 \rightarrow u_{jk} = -u_{jk}$

Cette étape permet de pointer tous les vecteurs unitaires quasiment alignés dans une direction commune.

Ensuite, on approxime à n chiffres significatifs chaque composante de $u_{jk}$ . Par exemple n est pris égal à 2 ou 3. L'utilisation de n >3 est conseillée seulement dans un scénario très bruité.

Ensuite on calcule, pour chaque composante, la valeur dominante parmi l'ensemble des vecteurs unitaires approximés. C'est-à-dire qu'on recherche le plus grand ensemble de vecteurs ayant la même valeur approximée de composante.

Ensuite on combine les résultats obtenus pour les trois composantes x,y,z afin de déterminer les points quasiment alignés, avec une tolérance donnée par l'approximation par le nombre n.

Une combinaison possible consiste à rassembler tous les points présents sur au moins deux plans de projections. Autrement dit, si on note $I_x$, $I_y$, $I_z$ les ensembles d'indexes des points du nuage avec les valeurs les plus récurrentes sur les composantes x,y,z respectivement, l'ensemble de points quasiment alignés est donné par la formule suivante :

$I = (I_x \cap I_y) \cup (I_x \cap I_z) \cup (I_y \cap I_z)$, où $\cup$ désigne l'opérateur union et $\cap$ désigne l'opérateur intersection.

Une autre approche possible consiste à mesurer l'angle entre chaque couple de vecteurs unitaires et à conserver l'ensemble des points pour lesquels la valeur absolue de cet angle ne dépasse pas un seuil prédéterminé proche de 0 et dimensionné pour accepter une certaine tolérance dans l'alignement des points.

Une troisième approche possible consiste à transformer les vecteurs unitaires en coordonnées sphériques (r, $\theta$, $\varphi$) et à introduire une tolérance sur les variations angulaires des composantes angulaires ($\theta$, $\varphi$).

Pour cela, on calcule un histogramme des valeurs de chaque composante angulaire ($\theta$, $\varphi$). L'histogramme est défini par un pas qui donne la tolérance souhaitée sur la variation angulaire.

Ensuite on détermine les valeurs les plus récurrentes dans ces deux histogrammes en prenant en compte les ambiguïtés de phases (modulo $\pi$).

L'ensemble de points quasi alignés recherché correspond à l'intersection des points ayant les valeurs les plus récurrentes respectivement sur les deux composantes angulaires.

A l'issue de l'étape 504, on obtient donc un ensemble de points quasi alignés avec le point sélectionné à l'étape 503.

Ensuite, à l'étape 505 on compare le nombre de points de l'ensemble obtenu avec un seuil $N_{min}$ qui est un nombre minimum de points considéré comme appartenant à une cible. Ce seuil est fixé en fonction du type de structure que l'on souhaite détecter. Dans le cas de canalisations ou tuyaux, ce seuil permet d'exclure la détection d'objets de petite taille qui peuvent plutôt appartenir au fouillis. La valeur du seuil $N_{min}$ dépend notamment de la résolution du déplacement du radar. Si les mesures réalisées par le radar sont très espacées spatialement, la valeur du seuil $N_{min}$ peut être prise basse. Si à l'inverse les mesures sont peu espacées, cette valeur peut être prise plus élevée. La valeur du seuil $N_{min}$ dépend également de la taille de la zone 3D balayée par le radar ainsi que de la longueur des structures à détecter. La valeur du seuil $N_{min}$ est par exemple prise dans l'intervalle [10 ;50].

Si le nombre de points de l'ensemble est strictement supérieur à $N_{min}$ alors, à l'étape 506 on conserve tous les points alignés que l'on associe à une structure détectée. Les points sont ensuite retirés de la liste à traiter et on incrémente (étape 508) l'indice i de la liste pour passer au point suivant d'amplitude la plus élevée parmi les points restants.

Si le nombre de points de l'ensemble est inférieur ou égal à $N_{min}$ alors le point sélectionné à l'étape 503 est éliminé (étape 507) de la liste à traiter et est considéré comme appartenant au fouillis, il est donc filtré du nuage de points 3D.

Les étapes 505 à 507 sont illustrées aux figures 6f à 6j. La figure 6f illustre les points quasi alignés conservés après la première itération.

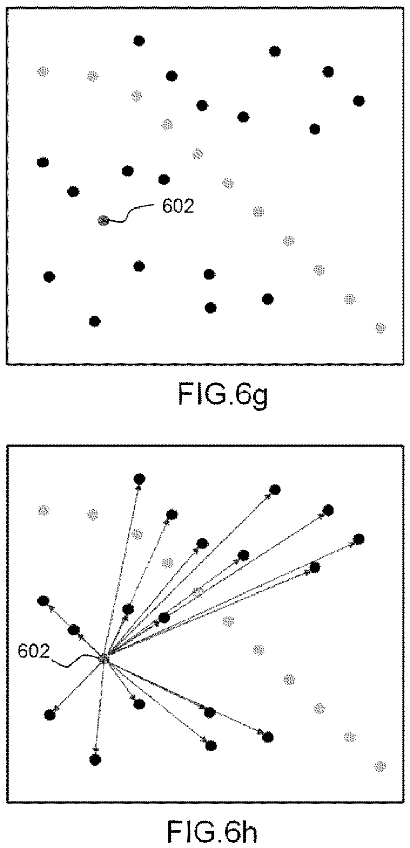

La figure 6g montre une 2eme itération du processus avec la sélection d'un autre point 602 d'amplitude la plus élevée parmi les points restants dans la liste à traiter. La figure 6h montre les vecteurs unitaires calculés à partir du point 602.

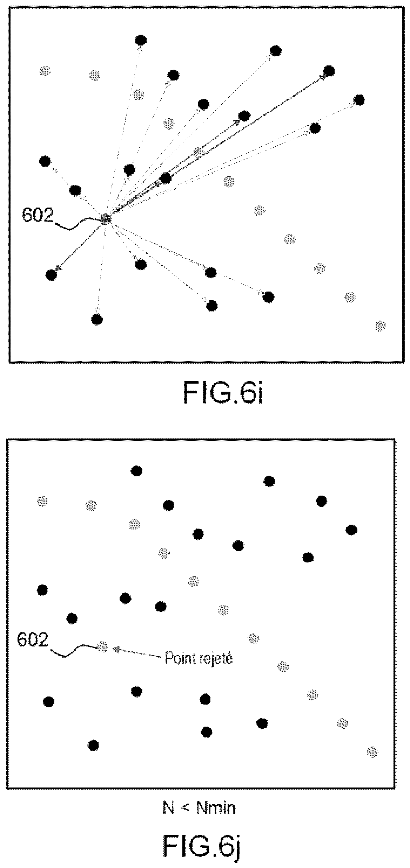

La figure 6i montre les points quasi alignés conservés. Dans cet exemple, le nombre de points quasi alignés est inférieur à $N_{min}$ et donc le point 602 est filtré (figure 6j).

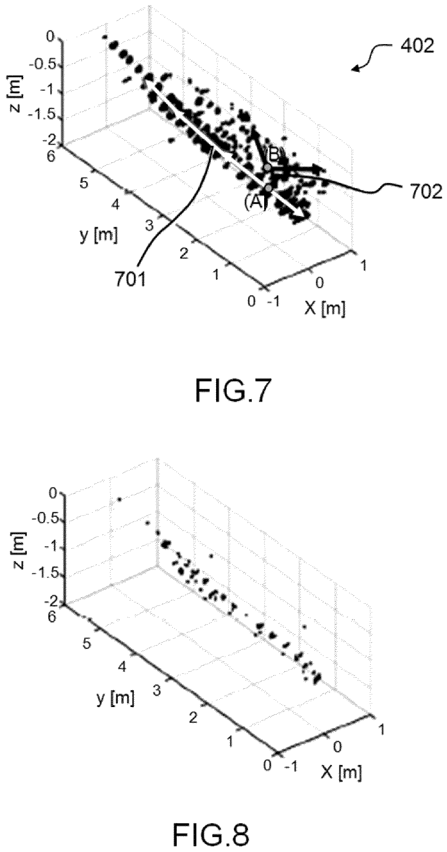

La figure 7 schématise le résultat du procédé sur le nuage de points 3D avec l'ensemble de points quasi alignés 701 correspondant à une structure longitudinale à détecter et les points 702 non alignés correspondant au fouillis.

La figure 8 montre le nuage de points 3D obtenu après suppression des points correspondant au fouillis.

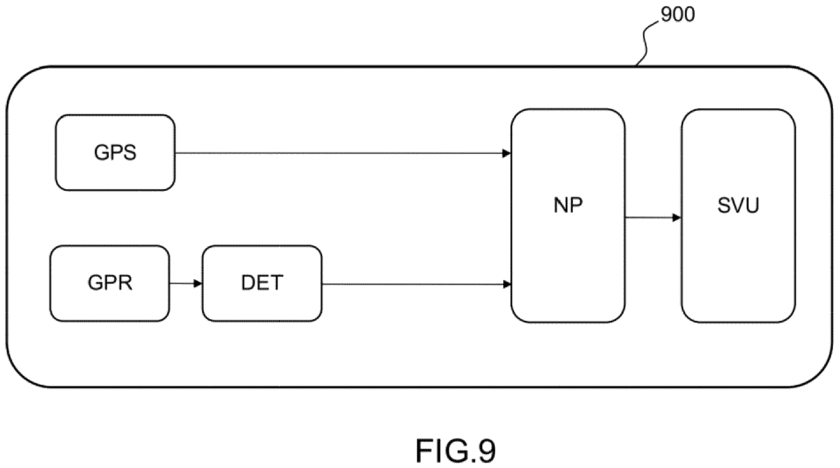

La figure 9 schématise un dispositif de détection radar selon l'invention. Le dispositif 900 comporte un module d'acquisition de signaux radar GPR, un module de géolocalisation GPS, un module de détection radar DET permettant de générer des images radar de plusieurs plans d'une zone du sol à partir des signaux radar acquis par le module GPR. Un module NP de création d'un nuage de points 3D est appliqué aux images radars obtenues en tenant compte des informations de géolocalisation. Dans le cas où le module de détection radar DET implémente un algorithme de détection MIMO, une étape de seuillage binaire peut être appliquée aux images radar afin de ne conserver que les points correspondant à des détections de cibles potentielles. Enfin, un module de détection de structures longitudinales SVU configuré pour exécuter les étapes de recherche de vecteurs unitaires similaires décrites ci-dessus est appliqué au nuage de points.

Les différents modules DET,SB,NP,SVU peuvent être réalisés sous forme logicielle et/ou matérielle notamment en utilisant un ou plusieurs processeur(s) et une ou plusieurs mémoire(s). Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

L'invention peut être implémentée seule ou en combinaison avec d'autres techniques de détection de lignes qui peuvent être appliquées en complément au nuage de points 3D filtré obtenu par la présente invention.

L'invention permet notamment de réduire le nombre de points du nuage de points en conservant uniquement les points appartenant à des cibles quasi-linéaires. Le nuage de points obtenu est ainsi plus parcimonieux et peut être fourni en entrée d'un autre algorithme de détection plus précis.

De façon générale, l'invention permet de réduire significativement les points correspondant au fouillis.

Références

[1] G. Zhan, L. Tsang, and K. Pak, "Studies of the angular corrélation function of scattering by random rough surfaces with and without a buried object," IEEE Trans. Geosci. Remote Sens., vol. 35, no. 2, pp. 444-453, Mar. 1997.

[2] T. Dogaru and L. Carin, "Time-domain sensing of targets buried under a rough air-ground interface," IEEE Trans. Antennas Propag., vol. 46, no. 3, pp. 360-372, Mar. 1998.

[3] J. Brooks, L. van Kempen, and H. Sahli, "A primary study in adaptive clutter réduction and buried minelike target enhancement from GPR data," in Proc. SPIE Détection and Remediation Technology for Mines and Minelike Targets V, 2000, pp. 1183-1192.

[4] M. El-Shenawee and C. Rappaport, "Monte Carlo simulations for clutter statistics in minefields: AP-mine-like-target buried near a dielectric object beneath 2-D random rough surfaces," IEEE Trans. Geosci. Remote Sens., vol. 40, no. 6, pp. 1416-1426, Jun. 2002.

[5] D. D. Carevic, M. Craig, and I. Chant, "Modelling GPR echoes from landmines using linear combination of exponentially damped sinusoids," in Proc. SPIE Détection and Remediation Technology for Mines and Minelike Targets II, 1998, vol. 3079, pp. 1022-1032.

[6] Raffaele Solimene, A. Cuccaro, A. Dell'Aversano, Ilaria Catapano and Francesco Soldovieri, "Ground Clutter Removal in GPR Surveys". IEEE journal of selected topics in applied earth observations and remote sensing, vol. 7, no. 3, march 2014

[7] U. S. Khan and W. Al-Nuaimy, "Background removal from GPR data using Eigen values," presented at the 13th Int. Conf. Ground Penetrating Radar (GPR), Lecce, Italy, 2010.

[8] R. Solimene and A. D'Alterio, "Entropy based clutter rejection for intra-wall diagnostics," Int. J. Geophys., vol. 2012, p. 7, 2012.

[9] Capineri, Lorenzo et al. "Advanced image-processing technique for real-time interprétation of ground-penetrating radar images." International Journal of Imaging Systems and Technology 9 (1998)

[10] Carlotto, Mark, "Detecting buried mines in ground penetrating radar using a Hough transform approach". Proceedings of SPIE - The International Society for Optical Engineering, 4741. 10.1117/12.478719, 2002.

## Revendications

1. Procédé de détection de structures longitudinales enterrées à l'aide d'un radar à pénétration de sol, le procédé comprenant les étapes de :

   - Réaliser (301) plusieurs acquisitions de signaux radar pour une zone du sol,
   - Déterminer (302), à partir desdits signaux radars, un nuage de points 3D, chaque point correspondant à une détection radar et étant géolocalisé dans l'espace,
   - Sélectionner (303) au moins un ensemble de points du nuage de points 3D comprenant un nombre de points supérieur ou égal à un seuil minimum de détection permettant de caractériser une structure longitudinale, les points dudit ensemble étant sensiblement alignés entre eux.

2. Procédé de détection selon la revendication 1 dans lequel l'étape de sélection (303) d'au moins un ensemble de points comprend les sous-étapes itératives de :

   - Ordonner (501) les points du nuage de points 3D dans une liste à traiter et sélectionner (503) le point de la liste de plus forte intensité,
   - Déterminer (504) les vecteurs unitaires dont l'origine est ledit point sélectionné et la direction est donnée par chacun des autres points du nuage de points 3D,
   - Déterminer (504) l'ensemble de points ayant des vecteurs unitaires sensiblement colinéaires,
   - Si le nombre de points dudit ensemble est supérieur ou égal audit seuil minimum de détection, identifier (506) ledit ensemble de points comme correspondant à une structure longitudinale et supprimer les points dudit ensemble de la liste à traiter sinon, supprimer (507) du nuage de points 3D et de la liste à traiter ledit point sélectionné de plus forte intensité,
   - Itérer (508) les sous-étapes jusqu'à ce que la liste à traiter soit vide.

3. Procédé de détection selon la revendication 2 dans lequel l'étape de déterminer (504) l'ensemble des points ayant des vecteurs unitaires sensiblement colinéaires comprend les sous-étapes de :

   - Approximer les valeurs numériques des composantes des vecteurs unitaires dans un repère 3D à un nombre de chiffres significatifs prédéterminé,
   - Former l'ensemble de points ayant des vecteurs unitaires sensiblement colinéaires en sélectionnant les points dont les composantes approximées sont identiques et les plus récurrentes.

4. Procédé de détection selon la revendication 3 comprenant en outre les sous-étapes de :

   - Déterminer la valeur dominante de chaque valeur numérique de composante approximée sur l'ensemble des vecteurs unitaires,
   - Combiner les points ayant la même valeur dominante pour les trois composantes du repère 3D.

5. Procédé de détection selon la revendication 4 dans lequel l'étape de combiner les points de même valeur dominante est réalisée en sélectionnant les points ayant les mêmes valeurs dominantes sur au moins deux composantes.

6. Procédé de détection selon la revendication 2 dans lequel l'étape de déterminer (504) l'ensemble des points ayant des vecteurs unitaires sensiblement colinéaires comprend les sous-étapes de :

- Calculer l'angle entre chaque couple de vecteurs unitaires,
- Conserver les points pour lesquels ledit angle est inférieur à un seuil prédéterminé en valeur absolue.

7. Procédé de détection selon la revendication 2 dans lequel l'étape de déterminer (504) l'ensemble des points ayant des vecteurs unitaires sensiblement colinéaires comprend les sous-étapes de :

- Convertir les vecteurs unitaires en coordonnées polaires,
- Déterminer un histogramme des valeurs absolues des composantes angulaires desdits vecteurs unitaires pour chaque composante angulaire, chaque histogramme ayant un pas d'échantillonnage prédéterminé,
- Déterminer les valeurs angulaires les plus récurrentes pour chacune des composantes,
- Conserver les points ayant les valeurs angulaires les plus récurrentes sur chaque composante.

8. Procédé de détection selon l'une quelconque des revendications précédentes dans lequel les points du nuage de points 3D sont géolocalisés à l'aide d'un dispositif de géolocalisation du radar à pénétration de sol.

9. Procédé de détection selon l'une quelconque des revendications précédentes dans lequel les acquisitions de signaux radar sont réalisées pour plusieurs plans de la zone du sol.

10. Radar à pénétration de sol comprenant au moins une antenne d'émission et au moins une antenne de réception et un dispositif de détection de structures longitudinales enterrées dans une zone du sol configuré pour exécuter les étapes du procédé de détection selon l'une quelconque des revendications précédentes.

11. Programme d'ordinateur comportant des instructions pour l'exécution du procédé selon l'une quelconque des revendications 1 à 9, lorsque le programme est exécuté par un processeur.

12. Support d'enregistrement lisible par un processeur sur lequel est enregistré un programme comportant des instructions pour l'exécution du procédé selon l'une quelconque des revendications 1 à 9, lorsque le programme est exécuté par un processeur.

FIG.1

FIG.2

Acquisition radars — 301

Construction nuage de points 3D — 302

Détection de lignes — 303

FIG.3

position
poids (intensité image)

$[(x, y, z), w]$

Construction du nuage de points

Images GPR-MIMO

401

402

302

FIG.4

EP 4 254 008 A1

EP 4 254 008 A1

**Nr** : Nombre de recherches de points alignés
**Nmin** : Nombre minimum des points considérés comme appartenant à une cible

501 — Début
- i = 1
- Ordonnancement décroissant (par poids)

502 — i > Nr ?
oui → Fin
non →

503 — Sélectionner le point de poids max

504 — Recherche des points alignés (N)

505 — N > Nmin ?
oui → 506 — Garder tous les points alignés
non → 507 — Eliminer le point sélectionné

508 — i= i+1

FIG.5

FIG.6a

FIG.6b

FIG.6c

FIG.6d

FIG.6e

FIG.6f

Points gardés

FIG.6g

FIG.6h

602

FIG.6i

602      Point rejeté

N < Nmin

FIG.6j

FIG.7

FIG.8

FIG.9

Europäisches
Patentamt

European
Patent Office

Office européen
des brevets

# RAPPORT DE RECHERCHE EUROPEENNE

Numéro de la demande

**EP 23 16 3684**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2013/321191 A1 (PEETZ BRUCE [US]) 5 décembre 2013 (2013-12-05) * abrégé * * alinéas [0026], [0055], [0060] * ----- | 1-12 | INV. G01S13/88 G01S13/89 G06F18/23 |
| Y | US 9 965 865 B1 (AGRAWAL AMIT KUMAR [US] ET AL) 8 mai 2018 (2018-05-08) * abrégé * * colonne 14, ligne 31 – ligne 56 * ----- | 1-12 | |

DOMAINES TECHNIQUES
RECHERCHES (IPC)

G01S
G06K
G06F

Le présent rapport a été établi pour toutes les revendications

| Lieu de la recherche | Date d'achèvement de la recherche | Examinateur |
|---|---|---|
| Munich | 7 août 2023 | Alberga, Vito |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 16 3684

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-08-2023

| Document brevet cité au rapport de recherche | Date de publication | Membre(s) de la famille de brevet(s) | Date de publication |
|---|---|---|---|
| US 2013321191 A1 | 05-12-2013 | US 2013321191 A1<br>US 2016018517 A1 | 05-12-2013<br>21-01-2016 |
| US 9965865 B1 | 08-05-2018 | AUCUN | |

Pour tout renseignement concernant cette annexe : voir Journal Officiel de l'Office européen des brevets, No.12/82

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3111994

**Littérature non-brevet citée dans la description**

- **G. ZHAN ; L. TSANG ; K. PAK.** Studies of the angular corrélation function of scattering by random rough surfaces with and without a buried object. *IEEE Trans. Geosci. Remote Sens.,* Mars 1997, vol. 35 (2), 444-453
- **T. DOGARU ; L. CARIN.** Time-domain sensing of targets buried under a rough air-ground interface. *IEEE Trans. Antennas Propag.,* Mars 1998, vol. 46 (3), 360-372
- **J. BROOKS ; L. VAN KEMPEN ; H. SAHLI.** A primary study in adaptive clutter réduction and buried minelike target enhancement from GPR data. *Proc. SPIE Détection and Remediation Technology for Mines and Minelike Targets V,* 2000, 1183-1192
- **M. EL-SHENAWEE ; C. RAPPAPORT.** Monte Carlo simulations for clutter statistics in minefields: AP-mine-like-target buried near a dielectric object beneath 2-D random rough surfaces. *IEEE Trans. Geosci. Remote Sens.,* Juin 2002, vol. 40 (6), 1416-1426
- **D. D. CAREVIC ; M. CRAIG ; I. CHANT.** Modelling GPR echoes from landmines using linear combination of exponentially damped sinusoids. *Proc. SPIE Détection and Remediation Technology for Mines and Minelike Targets II,* 1998, vol. 3079, 1022-1032
- **RAFFAELE SOLIMENE ; A. CUCCARO ; A. DELL'AVERSANO ; ILARIA CATAPANO ; FRANCESCO SOLDOVIERI.** Ground Clutter Removal in GPR Surveys. *IEEE journal of selected topics in applied earth observations and remote sensing,* Mars 2014, vol. 7 (3
- **U. S. KHAN ; W. AL-NUAIMY.** Background removal from GPR data using Eigen values. *13th Int. Conf. Ground Penetrating Radar (GPR), Lecce, Italy,* 2010
- **R. SOLIMENE ; A. D'ALTERIO.** Entropy based clutter rejection for intra-wall diagnostics. *Int. J. Geophys.,* 2012, vol. 2012, 7
- **CAPINERI, LORENZO et al.** Advanced image-processing technique for real-time interprétation of ground-penetrating radar images. *International Journal of Imaging Systems and Technology,* 1998, 9
- **CARLOTTO, MARK.** Detecting buried mines in ground penetrating radar using a Hough transform approach. *Proceedings of SPIE - The International Society for Optical Engineering,* 2002, 4741